## Europäisches Patentamt
## European Patent Office
## Office européen des brevets

(19)

(11) Veröffentlichungsnummer : **0 016 442**
**B1**

(12)

# EUROPÄISCHE PATENTSCHRIFT

(45) Veröffentlichungstag der Patentschrift :
03.02.82

(51) Int. Cl.³ : **A 23 L 1/176**

(21) Anmeldenummer : **80101357.4**

(22) Anmeldetag : **14.03.80**

(54) **Verfahren und Vorrichtung zur Herstellung von Paniermehl sowie ein Paniermehl.**

(30) Priorität : **15.03.79 CH 2505/79**
**16.05.79 DE 2919845**

(43) Veröffentlichungstag der Anmeldung :
**01.10.80 (Patentblatt 80/20)**

(45) Bekanntmachung des Hinweises auf die Patenterteilung : **03.02.82 Patentblatt 82/05**

(84) Benannte Vertragsstaaten :
**BE FR GB IT NL SE**

(56) Entgegenhaltungen :
FR - A - 483 382
FR - A - 2 339 344
GB - A - 1 049 102
US - A - 3 133 818
US - A - 3 445 239

*Ullmanns Encyklopädie der technischen Chemie,*
*4. Auflage, Band 2, Seite 13*

(73) Patentinhaber : **Gebrüder Bühler AG**

**CH-9240 Uzwil (CH)**

(72) Erfinder : **Seiler, Werner**
**Weiern**
**CH-9523 Züberwangen (CH)**

(74) Vertreter : **Hagemann, Heinrich, Dr. et al**
**Patentanwälte GEYER, HAGEMANN & PARTNER**
**Postfach 860329**
**D-8000 München 86 (DE)**

# 0 016 442

## Verfahren und Vorrichtung zur Herstellung von Paniermehl sowie ein Paniermehl

Die Erfindung betrifft ein Verfahren zur Herstellung von Paniermehl, insbesondere eines als Instantprodukt verwendbaren Paniermehls, eine Vorrichtung zur Herstellung eines derartigen Paniermehls sowie ein Paniermehl selbst.

Paniermehl (hergeleitet vom lateinischen Wort panis = Brot) ist ein mehr oder weniger gekörntes Mehl, das auch Brösel genannt wird. Bei seiner Verwendung soll es den Bratvorgang begünstigen, indem es z.B. das beim Braten von Fleisch austretende Fett und den Fleischsaft auffängt. Daher muß es eine gute Haft- und Saugfähigkeit haben, ohne den Geschmack des panierten Produktes zu überdecken. Die Farbe des Paniermehls ist hell oder dunkel, was von der Art des Herstellungsverfahrens und der Art der eingesetzten Rohmaterialien abhängt. Die im Haushalt anfallenden Paniermehle sind meistens dunkler. Der Grund liegt darin, daß zu dessen Herstellung im Haushalt bevorzugt Brotabschnitte verwendet werden. Vielfach verarbeitet die Hausfrau auch stark gebackenes Brot zu Paniermehl. Der Brotrindenanteil ist aber in beiden Fällen größer und gibt dem Paniermehl eine dunkle Farbe. Der aus Brotrinde gewonnene Paniermehlanteil hat ein geringeres Quellvermögen und neigt beim Braten zum Verkohlen. Die Komponenten der Rinde, die sich aufgrund chemischer Vorgänge beim Backprozeß gebildet haben, wie Dextrin (bei 110° bis 140 °C), karamellartige Stoffe (bei 140° bis 150 °C) und Röstprodukte (bei 150° bis 200 °C) sowie verkohlte Teile, sind in Paniermehl unerwünscht. Ein zu großer Anteil an Brotrinde gibt daher dem Paniermehl einen nicht gewünschten charakteristischen Geschmack.

Bei der industriellen Herstellung von Paniermehl wird den obigen Gesichtspunkten Rechnung getragen. So werden aus psychologischen Gründen häufig sehr helle Paniermehle zum Verkauf angeboten. Bei den Broten, die speziell für die Herstellung von Paniermehl vorgesehen sind, wird darauf geachtet, daß wenig dunkle Rinde entsteht, so daß der Geschmack des Paniermehls neutral ist und nur leicht den Geschmack üblichen Brots annimmt. Dieser Brotgeschmack sollte auf keinen Fall hervorstechen.

Nach einer früheren Definition sind Paniermehle unwichtige Küchenzubehöre, denen der Wortteil « Mehle » anhängt, weil sie aus einem dem Backprozeß angeschlossenen, zerkleinernden Aufbereitungsprozeß stammen. Eigentlich sollten sie Panierbrösel heißen. Unter « Panieren » versteht man nach einer mehr als hundert Jahre alten Definition « Fleischstück mit geriebenem Brot bestreuen » (vgl. Brockhaus, Ausgabe 1861). Die Verwendung einer kuchenartigen Gebäckmasse wird nicht erwähnt. Nach einer Definition im Duden wird unter Backen « mit Teig zubereiten und unter Hitzeeinwirkung gar und eßbar machen » verstanden. Auf jeden Fall sind Rösteffekte bei der Herstellung von Paniermehl unerwünscht.

Die obigen Definitionen sind heute nur noch beschränkt gültig, wenn man auf die derzeitigen Verbrauchsgewohnheiten und Tendenzen abstellt. « Paniermehle » sind daher auch häufig verwendete, neutrale Füllstoffe, z.B. als Fleisch-, Mandel- und Nußfüllungen geworden. Des weiteren werden sie verwendet, um Soßen, Snacks usw. herzustellen. Besonders gefragt sind immer stärker speziell gewürzte Paniermehle für Fertigmahlzeiten.

Die zwei bisher üblichen industriellen Verfahren zur Herstellung von Paniermehl sind einander ähnlich. Bei einem älteren Verfahren werden Backwaren, Semmeln, Brote usw., die nicht verkauft werden konnten, getrocknet und zu der gewünschten Feinheit vermahlen. Dieses Verfahren ist an sich ökonomisch, da die Backware vollständig als Nahrungsmittel verwertet wird. In jüngerer Zeit wird es jedoch mehr und mehr in Frage gestellt. Die Zweifel sind primär durch die Probleme der Hygiene aufgekommen. Da die Verteilorganisationen großflächige Verteilnetze haben, ist ein regelmäßiges Wiedereinsammeln nicht verkaufter Stücke sehr aufwendig. Dabei werden strenge hygienische und außerdem strenge Haltbarkeitsanforderungen gestellt. Das normal gebackene Brot hat nämlich eine verhältnismäßig hohe Feuchtigkeit, so daß es nach kurzer Lagerzeit in einer ungeeigneten Verpackung oder dergl. schimmlig wird. Die Infektion der Backwaren mit Schimmelpilzen erfolgt teils über die Luft (indirekte Infektion), teils bei der Berührung mit verunreinigten Oberflächen von Maschinen, Geräten usw. (direkte Infektion). Eine verschimmelte Backware gilt im Sinne des Lebensmittelgesetzes als verdorben. Sie ist nicht nur im Aussehen, Geruch und Geschmack beeinträchtigt, sondern es besteht auch die Gefahr der Verunreinigung mit toxischen Stoffwechselprodukten der Schimmelpilze. Aus den obengenannten Gründen ist dieses Verfahren daher nur innerhalb eines Bäckerei-, Gastwirtschaft- oder eines anderen Betriebes anwendbar, da nur innerhalb des selben Betriebes eine ausreichende Kontrolle sichergestellt ist.

Bei einem jüngeren Verfahren werden nun zur Gewinnung von Paniermehl Spezialbrote hergestellt. Dieses Verfahren hat sich vor allem deshalb im industriellen Maßstab durchsetzen können, weil nicht nur billigere Brotformen hergestellt, sondern auch die Brotqualität den Anforderungen des Paniermehls angepaßt werden konnte.

In jüngster Zeit sind eine Anzahl neuerer Verfahren bekannt geworden, die sich wesentlich von der klassischen Methode, die z.B. in der CH-A-335 934 beschrieben wird, unterscheiden. In der DD-A-100 624 wird z.B. ein Verfahren zurkontinuierlichen Herstellung von Semmelmehl beschrieben, bei dem Weizenmehl mit Wasser und Salz zu einem dickflüssigen Teig verrührt wird. Die Teigmasse wird anschließend in Streifen von 1 bis 2 cm auf einem beheizten Stahlband gebacken, getrocknet, oberflächlich gebräunt und gemahlen. Aus dem Mahlprodukt wird dann schließlich das Paniermehl gewonnen.

Nach einem weiteren, in jüngster Zeit entwickelten Verfahren wird versucht, den Backprozeß mit hoher Hitze und Druck unter Einsatz von Extrudern nachzuvollziehen. Es ist nicht bekannt, daß mit einem derartigen Verfahren befriedigende Ergebnisse erzielt werden. Die Anlageinvestition wie auch der Energieverbrauch sind bei den beiden zuletzt beschriebenen Verfahren nicht geringer als bei dem traditionell gewählten Verfahren über das eigentliche Brot.

Die FR-A 2 339 344 befaßt sich mit einem Verfahren zur Herstellung von Cous-Cous aus einem stärkehaltigen Rohmaterial. Cous-Cous stellt ein Grundnahrungsmittel in den nordafrikanischen Staaten dar, das sich durch hohes Quellvermögen auszeichnet und eine ausgesprochene Teigware darstellt. Nach dem bekannten Verfahren wird so vorgegangen, daß das Rohmaterial auf einen Wassergehalt von vorzugsweise 30 bis 40 % aufgefeuchtet wird. Danach erfolgt ein Mischen unter Bildung von Agglomeraten, die in getrennten Verfahrensstufen einer Wärmeeinwirkung ausgesetzt, getrocknet und dann granuliert werden. Die thermische Behandlung erfolgt derartig, daß Luft einer Temperatur von etwa 100 °C im Kreislauf über das feuchte Agglomerat geführt wird. Dabei tritt eine schwache Gelatinisierung auf der Oberfläche der die Agglomerate bildenden Teilchen auf, so daß die Agglomerate dadurch eine gewisse Festigkeit erhalten. Eine weitergehende Gelatinisierung muß in jedem Falle vermieden werden, da sonst das angestrebte Produkt den Teigwarencharakter verliert und nicht mehr bezüglich seiner Eigenschaften mit dem traditionellen Cous-Cous-Produkt übereinstimmt. Dieses wird dadurch hergestellt, daß Hartweizengrieß verwendet wird, der mit Wasser befeuchtet, dann gesiebt, gerollt und in der Sonne getrocknet wird (vergl. Maurizio « Nahrungsmittel aus Getreide », 2. Band, 1919, 4. Abschnitt « Die Teigwaren oder Nudeln », S. 128 und 129). Ein ausgesprochenes Backwarenprodukt, zu dem Paniermehl zu zählen ist, kann demzufolge nach dem in der FR-A 2 339 344 beschriebenen Verfahren nicht erhalten werden. Zudem eignet sich das danach herstellbare Cous-Cous-Produkt nicht als Instant-Produkt.

Entsprechendes gilt auch für das Verfahren, das sich aus der US-A 3 445 239 ergibt. Danach wird z.B. ein Getreidemehl unter erhöhter Temperatur auf eine Feuchtigkeit von mehr als 40 % aufgefeuchtet, wodurch bereits eine partielle Gelatinisierung der feuchten Teilchen stattfindet. Im Anschluß daran werden diese partiell gelatinisierten Teilchen bei einer Temperatur von 127-149 °C zum Backen und zur weiteren Gelatinisierung erhitzt. Das erhaltene Produkt wird gemahlen und verschiedenen Siebungen unterzogen, um auf diese Weise gebackene Teilchen gewünschter Größe zu erhalten.

Der Erfindung liegt die Aufgabe zugrunde, ein Verfahren anzugeben, nach dem kontinuierlich und wirtschaftlich ein Paniermehl, insbesondere ein als Instant-Produkt verwendbares Paniermehl, herstellbar ist. Des weiteren soll die Erfindung eine zur Durchführung eines derartigen Verfahrens besonders geeignete Vorrichtung sowie ein neuartiges verbessertes Paniermehl angeben.

Erfindungsgemäß wird diese Aufgabe dadurch gelöst, daß ein stärkehaltiges Rohmaterial in Form von Mehl, Dunst, Grieß oder Schrot unter Bildung von Agglomeraten bis auf einen Wassergehalt von 20 bis 50 Gew.-% aufgefeuchtet wird, anschließend die Agglomerate in heißem Wasserdampf so lange gebacken werden, bis sich darin ein Gelatinisierungsgrad von 50 bis 100 % eingestellt hat, und darauf die Agglomerate getrocknet werden.

Die erfindungsgemäße Vorrichtung ist gekennzeichnet durch eine Einrichtung zum Auffeuchten des Rohmaterials, eine Backeinrichtung mit einem siebartigen Förderband und einem Trockner.

Das erfindungsgemäße Paniermehl, das nach dem erfindungsgemäßen Verfahren erhältlich ist, wird des weiteren durch einen nahezu 100 %igen Stärkeaufschluß neben dem genannten Gelatinisierungsgrad von 50 bis 100 % gekennzeichnet. Die Bindung innerhalb der Agglomerate der Rohmaterialien erfolgt durch Kleber.

Wenn im Rahmen der Erfindung von Paniermehl gesprochen wird, so ist dieser Begriff im weitesten Sinne zu verstehen. D.h., es handelt sich nicht nur um ein « Mehl », das z.B. zum Panieren von Bratenfleisch verwendet wird, sondern es dient auch als neutraler Füllstoff für Fleisch-, Mandel- und Nußfüllungen sowie zur Herstellung von Soßen und Snacks usw. Gleichermaßen soll es auch, insbesondere in gewürzter Form, in Fertigmahlzeiten verwendet werden. Es stellt also im Grunde genommen ein sehr wichtiges Küchenzubehör in Form eines mehr oder weniger rieselfähigen teilchenförmigen Produkts dar, dessen Verwendung nicht auf die oben genannten Einsatzmöglichkeiten beschränkt ist. So bleibt es dem Geschick einer jeden tüchtigen Hausfrau überlassen, die auf eine gute und individuelle Küche bedacht ist, die verschiedensten Mahlzeiten nunmehr auch unter Einsatz eines solchen « Paniermehls » bzw. « Brotbrösels » zuzubereiten.

Die Art des stärkehaltigen Rohmaterials unterliegt keinen wesentlichen Beschränkungen. Es muß lediglich in Form von Mehl, Dunst, Schrot oder Grieß vorliegen, um erfindungsgemäß verarbeitet zu werden. Für die Zwecke der Erfindung sind insbesondere Körnerfrüchte von Pflanzen geeignet, die wegen ihrer stärkemehlreichen, trockenen Kornfrüchte oder Samen für die menschliche Ernährung seit langem angebaut werden. Dabei kann es sich z.B. um Weizen, Roggen, Gerste, Hafer, Reis, Mohrenhirse und Mais handeln. Die daraus hergestellten Mehle können verschiedenen Mehltyps sein, wobei der Mehltyp der mit dem Faktor 1000 multiplizierte Aschegehalt der Mehltrockensubstanz ist. So kommen z.B. Weizenmehle des Typs 405 (sogenanntes Auszugsmehl), 550 (Semmelmehl), 812 und 1050 (Mischbrotmehl), 1700 (Backschrot) und Roggenmehle der Type 997 (helles Brotmehl), 1150 (Mischbrotmehl, Graubrotmehl), 1370 (Komißbrotmehl) und 1800 (Backschrot) in Frage. Selbstverständlich sind die Rohstoffquellen für das erfindungsgemäße Verfahren nicht auf die obengenannten Getreidepflanzen beschränkt. Vielmehr sind auch beliebige andere Pflanzen mit stärkehaltigen Früchten in Betracht zu ziehen, die jedoch entweder, wie Getreidekörner und dergl., ausreichend Eiweiß (kleber) enthalten müssen oder denen das erforderliche Eiweiß in einer ausreichenden Menge noch zugegeben werden muß. Die Bedeutung des Eiweißanteils in dem Ausgangsmaterial des erfindungsgemäßen Verfahrens wird nachfolgend noch näher erläutert.

Erfindungsgemäß wird das stärkehaltige Rohmaterial in Form von Mehl, Dunst, Grieß und/oder Schrot in einer geeigneten Vorrichtung zu Agglomeraten eines Wassergehalts von etwa 20 bis 50 Gew.-% aufgefeuchtet, in der Regel während 2 bis 20 min. Besonders bevorzugt wird dabei ein Wassergehalt von 30 bis 40 Gew.-%. Die durch die Agglomerierung erhaltenen Teigagglomerate sollten vorzugsweise einen Durchmesser von weniger als 20 mm aufweisen, um unter dem Einfluß feuchter Wärme anschließend gebacken zu werden. Der besonders bevorzugte Teilchengrößenbereich der Agglomerate liegt dabei zwischen 0,2 und 8 mm. Die besten Resultate werden erzielt, wenn das stärkehaltige Rohmaterial in einem Durchlaufpalettenmischer zu lockeren Teigagglomeraten aufgefeuchtet und die sich bildenden Zusammenballungen mit mechanischer Schneidwirkung zu Einzelagglomeraten von z.B. weniger als 6 mm, zerkleinert bzw. aufgelöst werden, um danach gebacken zu werden. Damit wird sichergestellt, daß anfallende Teigklumpen in kleinere Agglomerate des erwähnten Durchmesserbereiches überführt werden.

Es ist von Vorteil, wenn die Auffeuchtung, Agglomeratbildung, die gegebenenfalls durchzuführende Zerkleinerung in kleinere Agglomerate und das anschließende Backen kontinuierlich erfolgen, wodurch beste Resultate erzielt werden. Dabei hebt sich das erfindungsgemäße Verfahren von der reinen Brotherstellung insbesondere dadurch ab, daß der Gärprozeß nicht aufwendig betrieben werden muß.

Ein Hefezusatz ist z.B. nicht erforderlich. Das führt zu einer kürzeren Verfahrensdauer. Des weiteren erfordert das erfindungsgemäße Verfahren im Vergleich zu den Verfahren zur Herstellung von Brot aufgrund des um die Hälfte niedriger liegenden Wasserbedarfs weniger Trocknungsenergie. Ein direktes Backen der Agglomerate mit heißem Wasserdampf ist von besonderem Vorteil, wobei dieses Backen vorzugsweise mit Naßdampf, d.h. übersättigtem Dampf erfolgt. In diesem Fall ist es besonders bevorzugt, wenn der Naßdampf mindestens soviel Feuchtigkeit enthält, daß der Feuchtigkeitsaustausch zwischen dem Rohmaterial und dem Naßdampf im Gleichgewicht steht. Besonders günstige Ergebnisse werden erreicht, wenn der Naßdampf soviel Feuchtigkeit enthält, daß die Feuchtigkeit des Rohmaterials um 1 bis 10 Gew.-% erhöht wird.

Der bei dem erfindungsgemäßen Verfahren beim Backen gewählte Dampf hat vorzugsweise eine Anfangstemperatur von 90° bis 200 °C, wobei der Bereich von 90 °C bis 130 °C besonders bevorzugt wird. Die Produkttemperatur beim Backen liegt vorzugsweise zwischen 60 und 100 °C, wobei der Bereich von 80 bis 95 °C als besonders bevorzugt gilt. Die günstigsten Ergebnisse werden daher dann erhalten, wenn die Produkttemperatur genau in dem Bereich gehalten wird, die im Inneren des Brotes während des üblichen Backens herrscht. Dabei fällt allerdings der große Zeitfaktor fort, der beim Backen von Brotlaiben zu berücksichtigen ist, bis die Wärme auch ins Innere des Brotes gewandert und damit das Brot durchgebacken ist.

Der Gelatinisierungsgrad spielt bei den erfindungsgemäß erhältlichen Verfahrensprodukten eine besondere Rolle und liegt zwischen 50 und 100 %, oft bei oder wenig unter 100 %. Der jeweils besonders günstige Gelatinisierungsgrad hängt davon ab, wofür das erfindungsgemäße Paniermehl verwendet werden soll.

Der gewünschte Gelatinisierungsgrad kann in besonders bequemer Weise dadurch eingestellt werden, daß das agglomerierte stärkehaltige Rohmaterial vorzugsweise 1 bis 20 Minuten, wobei der Bereich von 2 bis 10 Minuten besonders bevorzugt wird, als Schüttschicht in der Backkammer, vorzugsweise auf einem siebartigen Förderband und/oder in einer Rundbackkammer mit fördernder, wirbelnder Palettenmischwelle gebacken wird. Die Backzeit kann den jeweiligen besonderen Anforderungen des Verfahrensproduktes angepaßt werden, insbesondere auch im Hinblick auf optimale Feuchtigkeits- und Temperaturverhältnisse. Für das gewöhnlich im Haushalt verwendete Paniermehl lag die günstigste Backzeit zwischen 2 und 6 Minuten, wobei in den meisten Fällen 4 Minuten Backzeit ausreichten. Längere Backzeiten führen, was in einigen Fällen von Vorteil sein kann, zu einer erhöhten Gelatinisierung. Die Struktur des Paniermehls ist jedoch im allgemeinen bei kürzeren Backzeiten besser.

Nach dem Backen soll das anfallende gelatinisierte Material durch mechanische Behandlung, sofern erforderlich, auf einen Teilchendurchmesser von wenigen mm, d.h. vorzugsweise weniger als 20 mm gebracht werden, wobei ein Teilchendurchmesser von weniger als 10 mm besonders bevorzugt wird. Damit kann verhindert werden, daß die Sinterung mit dem Kleber über die im Paniermehl gewünschte Korngröße der Agglomerate hinaus gestoppt wird. Bei dieser Zerkleinerung handelt es sich nicht um ein übliches Mahlen, sondern eher um ein Zerteilen oder Zerschneiden der Agglomerate. Aus diesem Grunde ergibt sich auf natürliche Weise ein sehr geringer Anteil an nicht erwünschtem Feinanteil von wenigen Prozenten, der wieder als Rohprodukt eingesetzt werden kann. Diese Zerkleinerung kann unter einer mechanischen Schneidwirkung erfolgen, z.B. in folgenden Einrichtungen : Auflöser, Rotor mit schrägverzahnten Querleisten, Messerhaspel oder -rotoren mit Schneidwirkung sowie ein Auflöser mit Siebwandung.

Anhand von Untersuchungen konnte im übrigen die Erkenntnis gewonnen werden, daß aufgrund der bei der Durchführung des erfindungsgemäßen Verfahrens beim Backen erforderlichen Einwirkung feuchter Wärme genau die gleichen thermischen Bedingungen nachgebildet werden, die während des traditionellen Backens im Inneren des Brotes herrschen. In der ersten Phase des Brotbackens während 5 bis 10 Minuten wird stets versucht, eine zu schnelle Rindenbildung durch Dampfwirkung im Backofen zu verhindern. Nach der Lehre der Erfindung wird nun der Backprozeß mit feuchter Wärme geführt, was nichts anderes bedeutet, als daß die erste Phase während des Brotbackens bzw. ähnliche Verhältnisse, die im Inneren des Brotes während des Backens herrschen, nachgebildet werden. Das erfindungsgemäße Paniermehl soll mit den optimalen thermischen Backbedingungen hergestellt werden, ohne daß die Nachteile beim Backen von ganzen Brotlaiben mit Kauf zu nehmen sind, nämlich hohe, besonders trockene Hitze und Einwirkzeiten von sehr langer Dauer, z.B. bis zu 1 Stunde, sowie hohe Wassergehalte der Backware vor dem Backen. Dabei ist es bemerkenswert, daß das erfindungsgemäße Paniermehl eine bessere chemische Struktur aufweist als ein Produkt, das aus der inneren Krume (d.h., ca. 1 bis 4 cm unter der Rinde des Brotes) hergestellt wird. Dextrinierte Teile fehlen in den besten erfindungsgemäßen Paniermehlprodukten praktisch vollständig.

Im Anschluß an das Backen bzw. das oben erläuterte Zerkleinern der Agglomerate erfolgt das Trocknen, wobei aus baulichen und verfahrenstechnischen Gründen das Backen und das Trocknen vorzugsweise in zwei getrennten Verfahrensstufen durchgeführt werden. Das geschieht vorzugsweise in kontinuierlichem Betrieb. Sowohl die Zerkleinerung nach dem Backen wie auch das anschließende Trocknen werden ohne Unterbruch mit dem zu behandelnden heißen Produkt durchgeführt.

Die krümelige Teigmasse kann im übrigen während des Trocknungsvorganges mehrmals umgeschichtet und auf weniger als 14 % Feuchtigkeitsgehalt zu einem Dauergebäck getrocknet werden, was vorzugsweise bei einer Temperatur unterhalb 100 °C erfolgt.

Unmittelbar nach dem Trocknen wird ein Teil der Paniermehlfraktion direkt durch Aussichten als Siebdurchfall gewonnen, während der Siebabstoß mittels Mahlwalzen zu der gewünschten Agglomeratgröße zerkleinert, gesichtet und der Vorgang ggf. wiederholt wird. Dabei wird ein sehr gleichmäßiges und gut aussehendes Endprodukt erhalten, wenn der Siebabstoß mittels Riffelwalzen durch Schneidwirkung zu der gewünschten Agglomeratgröße zerkleinert wird.

Das erfindungsgemäße Verfahren läßt sich vielfältigen Variationen im Hinblick auf eine Zusatzbehandlung der verarbeiteten Materialien unterziehen. So können in jeder Verfahrensstufe beliebige geeignete Zusatzstoffe z.B. zugemischt oder auch aufgesprüht werden. Dabei kommen als besonders vorteilhafte Zutaten Salz, Pfeffer, Paprika, Zucker, Aromastoffe neben anderen Ergänzungsstoffen in Frage. Im allgemeinen werden diese vor oder nach der Auffeuchtung beigemischt. Je nach der während der Back- und/oder Trocknungsphase vorliegenden Atmosphäre können auch besondere chemische Vorgänge, wie die Aromaausbildung, gezielt direkt als integrierter Teil der Paniermehlfabrikation durchgeführt werden.

Das erfindungsgemäß erhältliche fertige Paniermehl, das in gekühltem Zustand den Trockner verläßt und gegebenenfalls noch gesichtet bzw. zerkleinert wird, zeigt eine Vielzahl beachtlicher Vorteile. So weist es eine einheitliche, hellmatte Farbtönung auf, ohne jegliche Abweichung, z.B. ohne dunkle Punkte. Das Mundgefühl wurde von Testpersonen als sehr angenehm, besonders auch während der Schluckbewegung, empfunden. Mit bloßem Auge ist bezüglich Kornform kaum ein Unterschied zu einem bekannten Paniermehl festzustellen. Dieser Unterschied wird deutlich, wenn man mikroskopische Aufnahmen heranzieht. So zeigt bereits eine mikroskopische Aufnahme bei 25-facher Vergrößerung Einzelkörner, die häufig rundlich oder teilweise rundlich und lediglich an einigen Stellen gebrochen sind, was auf die Verkleinerung zurückgeht. Teilweise scheinen in den erfindungsgemäßen Paniermehlgranulaten kleine Luftbläschen eingebacken zu sein. Die Formen sind eher als weich zu bezeichnen und machen wegen der hohen Gelatinisierung einen stark glasigen Eindruck. Die mikroskopische Betrachtung der Stärkeverkleisterung zeigt ferner einen Stärkeaufschluß bis zu etwa 100 %. Das Kriterium der aufgeschlossenen Stärke ist das Verschwinden der Doppelbrechung des Lichtes, was sich dadurch zu erkennen gibt, daß intakte Stärkekörner mit einem Kreuz stark aufleuchten. Auch die β-Amylase-Methode (entwickelt an der Kansas State University, Manhattan, USA) ergab mit 370 mg Maltose/g Trockensubstanz einen sehr hohen Aufschließungsgrad der Stärke, die nach der Vorschrift des Beispiels 1 verarbeitet wurde.

Schließlich wurde von allen Testpersonen einhellig bestätigt, daß damit behandelte bzw. panierte Produkte, insbesondere Fleich, nach Geschmack bzw. Mundgefühl gegenüber zum Vergleich herangezogenen Handelsprodukten verbessert sind. Es erweist sich als ein leicht verdauliches und hochwertiges Nahrungsmittel und wird damit zu einem bedeutsamen Küchenhilfsmittel.

Bei der Herstellung des erfindungsgemäßen Paniermehls tritt durch Abkühlung eine bedingte Retrogradation (Rekristallisation der Stärke) auf, die durch die Regelung der Produktionsbedingungen ohne weiteres kontrollierbar und steuerbar ist, worin ein besonderer Vorteil des erfindungsgemäßen Verfahrens gegenüber dem Verfahren, das von Brot ausgeht, zu sehen ist.

Das erfindungsgemäße Paniermehl weist des weiteren eine vorzügliche Proteinstruktur auf. Damit sind aber besonders günstige Voraussetzungen für eine vorteilhafte Anwendung des erfindungsgemäßen Erzeugnisses geschaffen, z.B. zum Panieren von Fleisch oder auch als Füllstoff z.B. für Hackfleisch, Nußfüllung und dergl. Dabei ist der regelmäßige bzw. gleichförmige Aufbau des erfindungsgemäßen Paniermehls von Bedeutung.

Überraschenderweise hat es sich gezeigt, daß das erfindungsgemäße Paniermehl auch als Instant-Produkt (praktisch unmittelbar gebrauchsfertig, z.B. in 1 bis 2 min) zu einem Gericht, wie Grieß oder Maisbrei, verarbeitet werden kann. Dabei wird das Instant-Produkt in stark gelatinisierter Form eingesetzt, wobei vorzugsweise zu 80 bis 100 % gelatinisierte Agglomerate gewählt werden, die durch Mahlen, Sichten usw. in die gewünschte Granulation überführt werden können. Bei der Verwendung in der Küche wird ein Teil Instant-Paniermehl mit 3 bis 5 Teilen heißem oder warmem Wasser in einer Schüssel vermischt. Unter leichtem Umrühren erhält man, je nach Wasseranteil, einen dünn- bzw. dickerflüssigen Grießbrei. Der Grießbrei kann nach geschmacklicher Abstimmung mit Zucker, Cremen usw. als Fertiggericht verzehrt werden. Das Paniermehl kann jedoch auch mit 1 bis 3 Teilen Wasser zu einem dickeren Brei angerührt werden, der sich nach einer kurzen Zeit verfestigt, um danach gebacken bzw. gebraten zu werden.

Das erfindungsgemäße Paniermehl hat, unabhänig von der gewählten Verwendungsart, stets den Vorteil, daß es nach seiner Verarbeitung aufgrund der bei seiner Herstellung vorgenommenen schonenden thermischen Behandlung einem zusätzlichen thermischen Prozeß, wie dem Backen, Braten und Kochen, unterzogen werden kann, um ein physiologisch einwandfreies und geschmacklich sehr zufriedenstellendes Gericht zu erhalten.

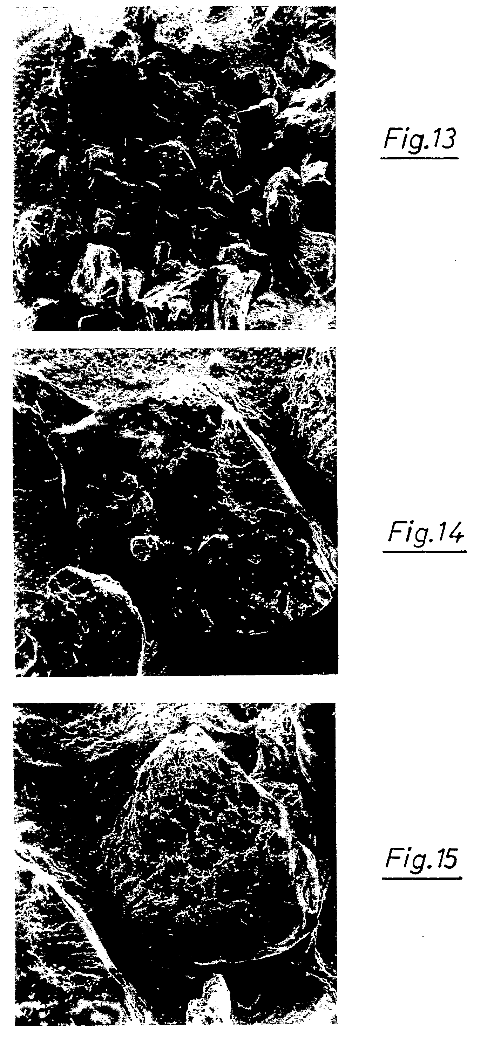

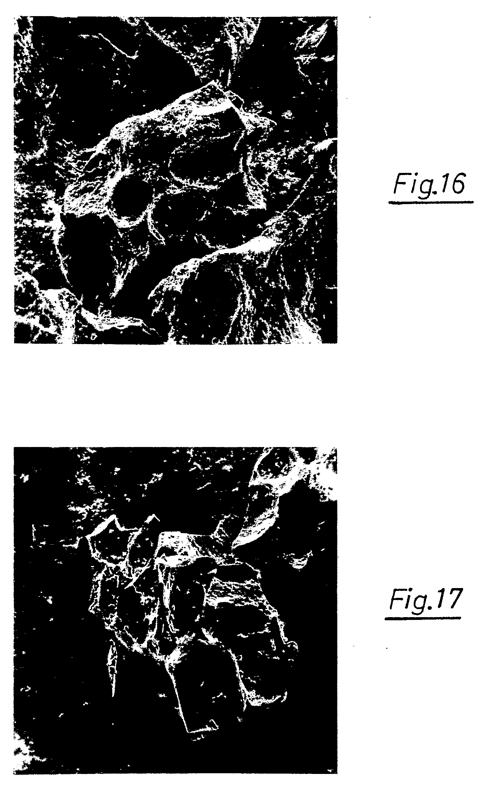

Das Aussehen des erfindungsgemäßen Paniermehls unterscheidet sich von bekannten Paniermehlen sehr deutlich. Das ergibt sich ohne weiteres bereits aus einem Vergleich der rasterelektronenmikroskopischen Aufnahme der Figuren 16 und 17, die bekannten Paniermehlen zuzuordnen sind und der Aufnahme der Figuren 13-15 (Erfindung). Die Figur 17 zeigt ein Paniermehl, das nach der traditionellen Hausfrauenmethode aus trockenen Brostresten hergestellt wurde, wobei allerdings relativ viel Brotrindenanteil eingesetzt wurde. Die Fig. 16 zeigt eine im Handel erhältliche Probe.

In den Figuren 16 und 17 erkennt man sehr deutlich zackige und bizarre Formen, die auf die gewaltsam zerkleinerte Brotstruktur zurückgehen. Des weiteren sind viele Hohlräume, die kleinsten Poren des Brotes, besonders aber viele flache plättchenartige Partikel sichtbar. Die dickeren Teile sind stark milchig, während lediglich die dünneren glasiges Aussehen haben. Besonders beim Haushaltspaniermehl sind viele dunkle Teile und auch Einschlüsse sichtbar. Bei dem im Handel erhältichen Paniermehl nach Figur 16 wurden 200 mg Maltose/g Trockensubstanz festgestellt.

Das bekannte Paniermehl, insbesondere das in der Figur 16 dargestellt, läßt unter einem Mikroskop eine Struktur erkennen, die eher mit einem ausgewaschenen Kalkstein, d.h., mit den sogenannten Karrenfeldern, vergleichbar ist. Unter dem Mikroskop waren bei allen untersuchten Mustern der bekannten Paniermehle zahlreiche intakte Stärkekörner feststellbar. Die für das Paniermehl qualitätsverbessernde Retrogradation fehlte im herkömmlichen, von Brotlaiben hergestellten Paniermehl weitgehend.

Nachfolgend soll die Erfindung noch näher anhand weiterer Figuren sowie von Beispielen erläutert werden. Wenn dabei von « Vorrichtung » gemäß der Erfindung gesprochen wird, so soll dieser Ausdruck sowohl kleine als auch größere Anlagen erfassen. In den Figuren bedeuten :

Figur 1   eine vereinfachte schematische Darstellung des erfindungsgemäßen Verfahrens,

Figur 2   eine schematische Darstellung der erfindungsgemäßen Vorrichtung,

Figur 3   eine dampfbeheizte Backkammer mit einem siebartigen Backband,

Figur 4   einen Längsschnitt eines Zerkleinerers,

Figur 5   einen Querschnitt der Figur 4,

Figur 6   einen Durchlaufbandtrockner,

Figur 7   eine schematische Darstellung einer Walzenschneidvorrichtung,

Figuren 8 und 9   einen Palettenmischer im Längs- bzw. Querschnitt,

Figur 10 eine Variante der schematischen Darstellung der erfindungsgemäßen Vorrichtung Rotationsbacktrommeln,

Figur 11   eine Rotationsbacktrommel nach der Figur 10,

Figur 12   die schematische Darstellung eines Brotlaibs,

Figur 13   rasterelektronenmikroskopische Aufnahmen (10-fache Vergrößerung) des erfindungsgemäßen Paniermehls,

Figuren 14 und 15   rasterelektronenmikroskopische Aufnahmen (50-fache Vergrößerung) des erfindungsgemäßen Paniermehls und

Figuren 16 und 17   rasterelektronenmikroskopische Aufnahmen (50-fache Vergrößerung) eines im Handel erhältlichen bzw. eines Haushaltsproduktes.

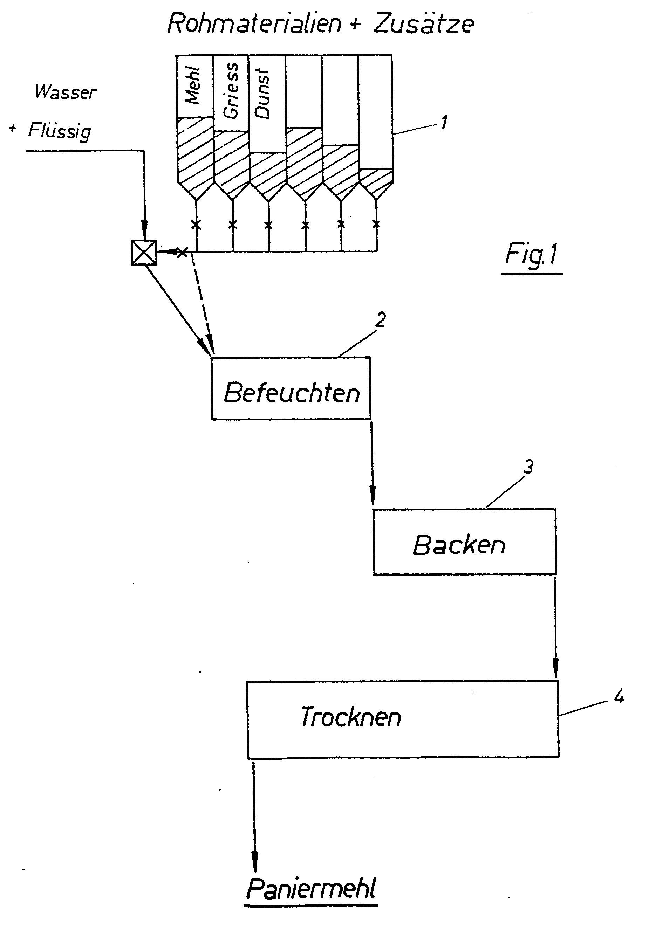

In der Figur 1 werden die wesentlichen Verfahrensschritte des erfindungsgemäßen Verfahrens schematisch dargestellt. Das Rohmaterial wird aus dem Bunker 1 in eine Befeuchtungseinrichtung 2, in einen Backofen 3 und einen Trockner 4 geleitet. Nach dem Trocknen kann bereits ein Teil des fertigen Paniermehls gewonnen werden.

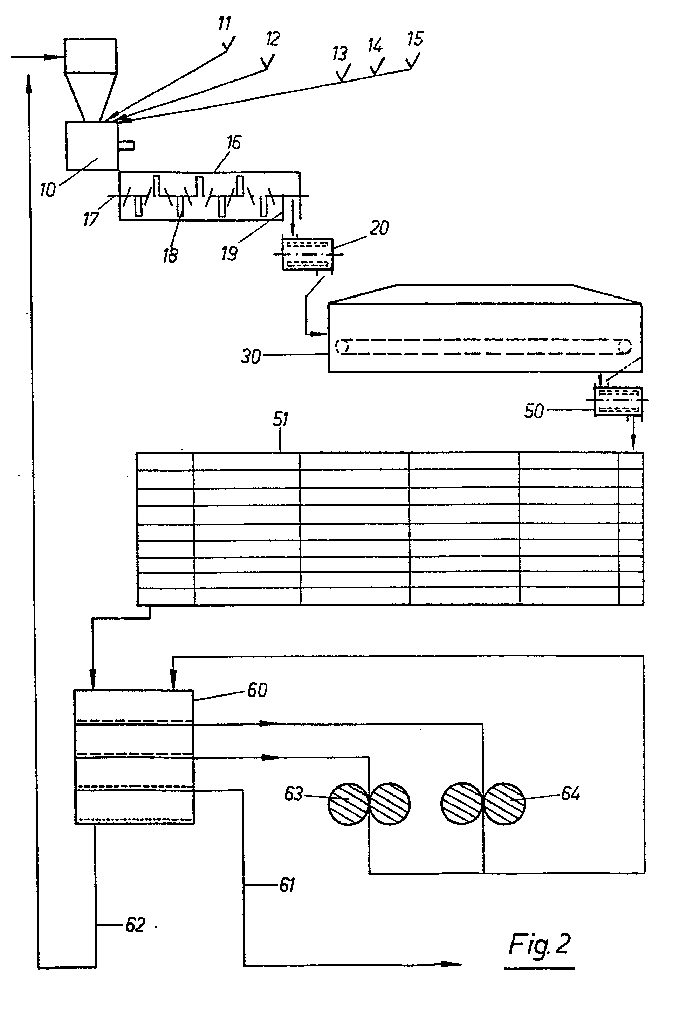

In der Figur 2 ist etwas konkreter, ebenfalls schematisch eine erfindungsgemäße Anordung gezeichnet. In einen Dosierapparat 10 münden verschiedene Ausgangskomponenten über einen Förderer, wobei es sich z.B. um das Rohmaterial 11, Wasser 12, übrige Flüssigkeitskomponenten 13, übliche Zusatzstoffe 14 und andere Stoffe 15 handeln kann. Der Dosierer 10 speist alle Stoffe in der gewünschten Stundenleistung in einen Palettenmischer 16, der eine oder zwei Mischwellen 17 mit einer größeren Zahl Paletten 18 aufweist. Der Palettenmischer 16 zeigt am austrittsseitigen Ende einen freien Überfall 19. Das Produkt fällt im agglomerierten Zustand über den Überfall 19, wobei die Agglomeratgröße von Bruchteilen von Millimetern bis zu Agglomeratklümpchen von einigen Zentimetern variiert.

Vom Palettenmischer 16 fallen die Agglomerate direkt in einen Zerkleinerer 20.

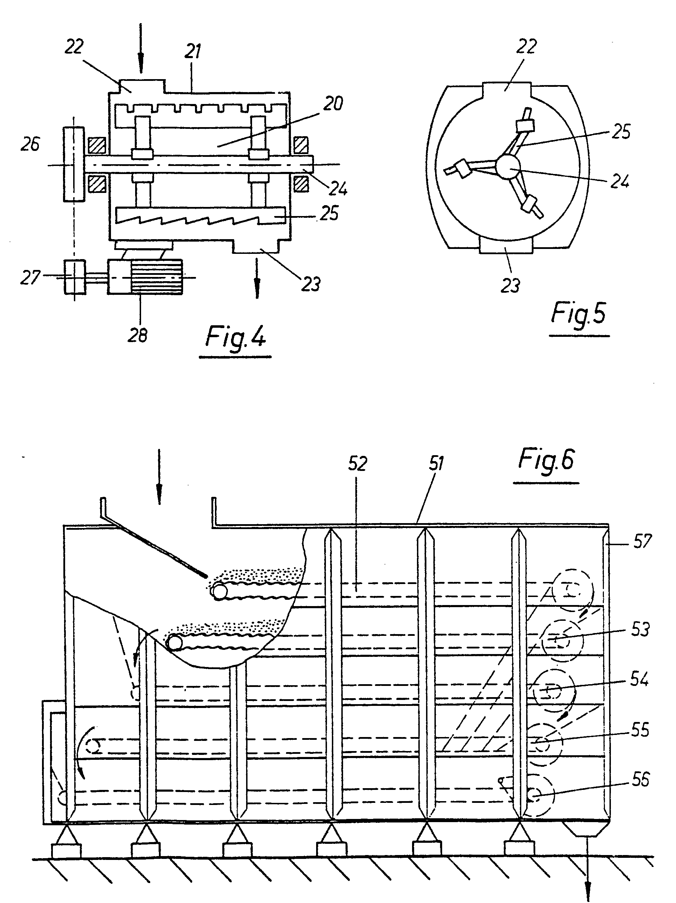

Der Zerkleinerer 20 wird in den Figuren 4 und 5 in einem größeren Maßstab dargestellt. In einem runden geschlossenen Gehäuse 21 mit Eintrittsstutzen 22 und Austrittsstutzen 23 ist ein schnellumlaufender Zerkleinerungsrotor 24 gelagert. Der Zerkleinerungsrotor 24 weist drei, vier oder mehr leicht gezahnte und längs verlaufende Zerkleinerungsmesser 25 auf. Ein direkt über die Riemenscheiben 26 und 27 angeflanschter Motor 28 treibt den Zerkleinerungsrotor 24 an. Das Produkt verläßt den Zerkleinerer 20 in einem nahezu rieselfähigen Zustand, wobei die Agglomerate Größen von weniger als einigen mm aufweisen, im Mittel zwischen ca. 0,5 und 3 mm. Da praktisch Rieselfähigkeit vorliegt, wird damit ein gleichmäßiges Beschicken der Backkammer 30 ermöglicht. Mehrere Mischer 16 und mehrere Zerkleinerer 20 werden vorzugsweise parallel geschaltet, um größere Leistungen zu erzielen. Im Zerkleinerer 20 wird die Agglomeratgröße durch den Längsspalt zwischen Messer und Gehäuse bestimmt. Die Agglomerate werden auf das entsprechende Höchstmaß von einigen mm geschnitten.

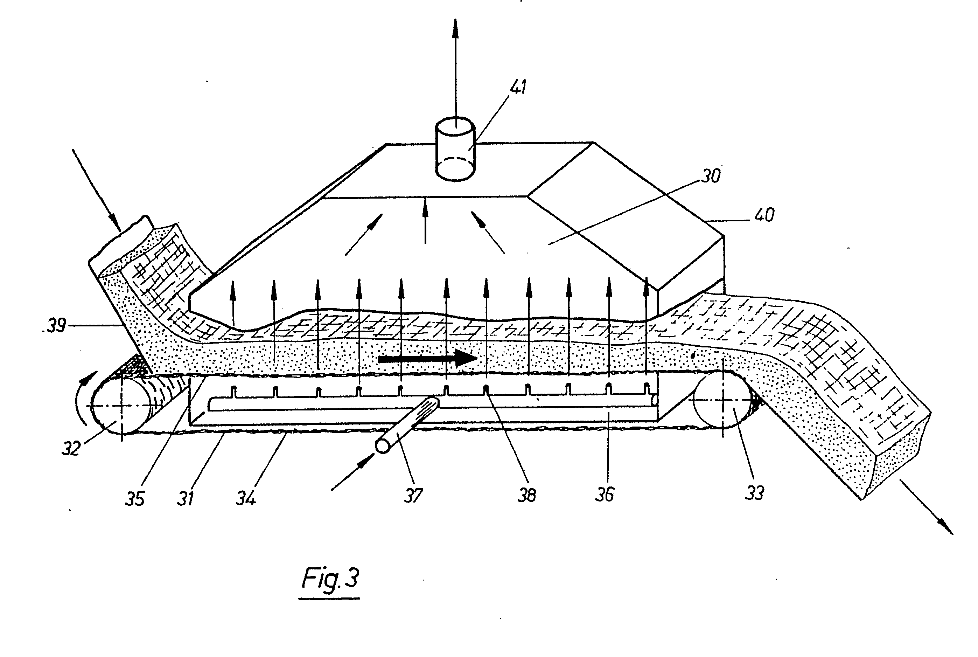

Die Backkammer 30 ist in Figur 3 in größerem Maßstab (halb Ansicht, halb Schnitt) dargestellt. Das Band 31, das aus luftdurchlässigem Drahtgewebe hergestellt worden ist, läuft über zwei Endrollen 32 und 33 und wird über nicht dargestellte Einrichtungen angetrieben. Zwischen dem oberen und unteren Trum 35 bzw. 34 ist ein Wasserdampfspeisekasten 36, am oberen Trum 35 fast anliegend, angebracht. Im Wasserdampfspeisekasten 36 ist ein Wasserdampfzuleitrohr 37 mit einer großen Einspritzdüse 38 angebracht, die den Wasserdampf und evtl. zusätzlich Heißluft oder ein Gemisch davon direkt gegen das obere Trum 35 einblasen. Das praktisch rieselfähige Gut wird über ein Lenkblech 39 auf das Backband 31 geschüttet. Durch die starke Durchströmung des Gutes mit dem Wasserdampf egalisiert sich die Schicht weitgegehend von selbst. Über dem Backband 31 ist eine Luft- bzw. Dampfsammelhaube 40 mit einem Abzugsstutzen 41 angebracht. Selbstverständlich kann die nicht in der Backkammer 30 absorbierte Wärme in der Anlage wieder zurückgewonnen werden. Sehr interessant ist es aber, daß das Gut auf dem Backband 31 nicht zu einer Art Brotband zusammenbackt. Einige Zentimeter Schichthöhe haben sich bisher als günstige Schichtdicke sehr gut bewährt. Während das Gut auf dem Backband 31 ruhend gefördert wird, nimmt es eine Festigkeit ähnlich wie der gepreßte Gießereiformsand an.

Es muß überraschen, daß das Gut, sobald es das Backband 31 verlassen hat und in einem Zerkleinerer 50 (analog Zerkleinerer 20) verarbeitet wird, im wesentlichen wieder in die gleichen Agglomerate, die in die Backkammer 30 überführt wurden, zerfällt, um so in rieselfähiger Form dem Trockner 51 zugeführt werden zu können. Mit dem feuchten Dampf hat das Gut nach der Backkammer 30 einige Prozent mehr Feuchtigkeit als beim Eintritt in die Backkammer 30. Nach Verlassen der Backkammer 30 hat das Gut, solange es warm ist, die Eigenschaften eines plastischen Produktes, d.h., man kann durch Rollenbewegungen mit den Fingern kleine teigartige Klümpchen formen.

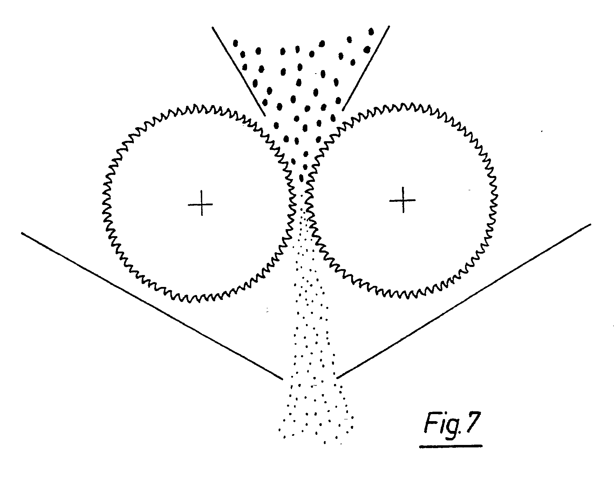

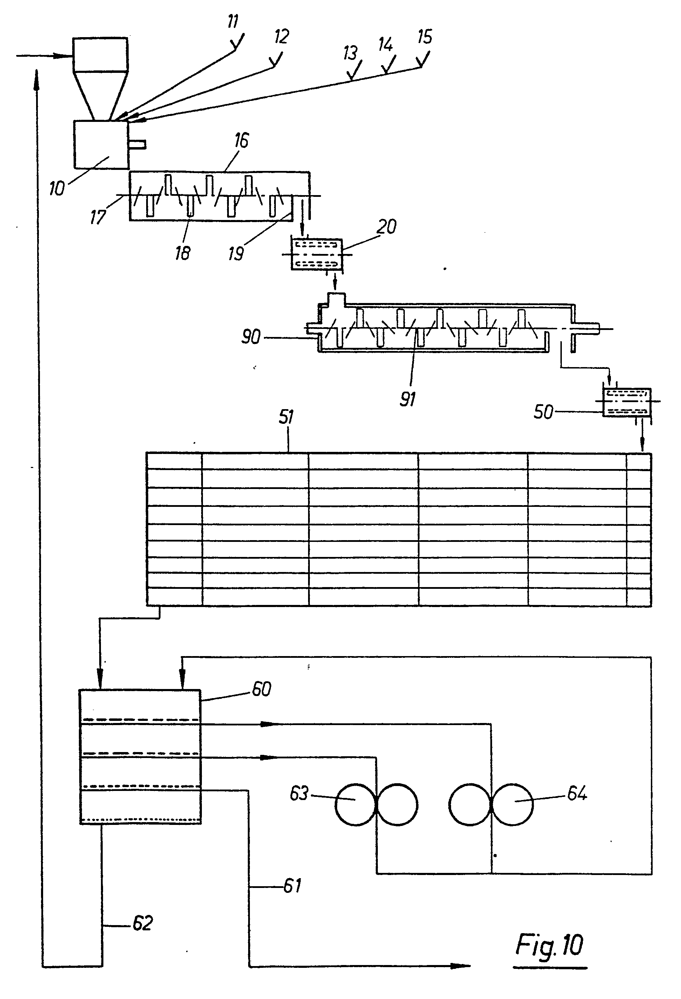

Der in der Figur 6 dargestellte Trockner 51 ist ein Durchlaufbandtrockner mit mehreren Schuppenbändern 52, 53, 54, 55 und 56, die alle übereinander in einem geschlossenen Trockenkasten 57 umlaufen. Ähnliche Trockner kennt man in der Teigwarenindustrie, z.B. bei der Herstellung von Kurzwaren. Es ist wichtig, daß die Agglomerate während der Trocknung von Band zu Band umgeschüttet werden. Das Trocknungsklima im Trockner kann je nach den Anforderungen, die an das Verfahrensprodukt gestellt werden, verschieden einreguliert werden. Am Ende des Trockners wird das Gut geringfügig abgekühlt und direkt in einen Sichter 60 mit mehreren Sieblagen geleitet (vgl. Figur 10). Der Abstoß 61 der unteren Sieblage stellt ein fertiges Paniermehl dar. Der Durchfall 62, der nur wenige Prozent der Gesamtmenge darstellt, ist zu fein und wird über eine pneumatsiche Förderleitung zurück in den Dosierapparat 10 geführt. Der Abstoß der ersten und zweiten Sieblage wird auf einen Walzenstuhl 63 bzw. 64 gegeben. Bei den Walzen haben sich Riffelwalzen, die stilisiert in der Figur 7 dargestellt werden, am besten bewährt. Es handelt sich dabei nicht um einen eigentlichen Mahlvorgang. Die zu großen Agglomerate werden in einer Art Schneidbewegung zu kleineren Agglomeraten zerschnitten. Bei diesem Vorgang entsteht nahezu kein Feingut. Von dem Walzenstuhl wird das Gut wieder zurück in den Sichter geführt.

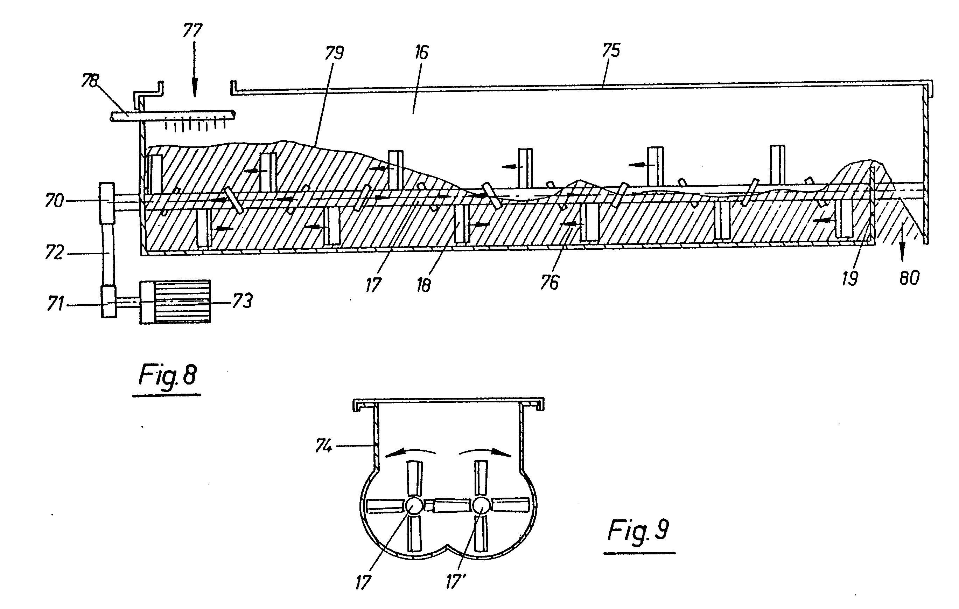

In den Figuren 8 und 9 wird der Palettenmischer 16 in größerem Maßstab dargestellt, wobei die Mischwelle 17 über zwei Riemenscheiben 70 bzw. 71 und einen Riemen 72 von einem Motor 73 angetrieben wird. Wie es aus der Figur 9 erkennbar ist, handelt es sich um einen Doppelwellenmischer mit zwei Mischwellen 17 bzw. 17', die in einem entsprechend geformten Mischergehäuse 74 gelagert sind. Das Mischergehäuse 74 weist eine obere Abdeckung 75 auf, die aus durchsichtigem Material ausgeführt sein kann, um den Mischprozeß beobachten zu können. Wie es ferner in Figur 9 dargestellt wird, bewegen sich die zwei Mischwellen 17 bzw. 17' gegenläufig, d.h., die Mischwelle 17' im Uhrzeigersinn und die Mischwelle 17 im Gegenuhrzeigersinn, wobei das Produkt in der mittleren Zone eine leichte Pressung bzw. Knetung erfährt. Die Paletten sind in verschiedenen Winkellagen an den Mischwellen 17 bzw. 17' befestigt. Wie mit den Pfeilen 76 angedeutet, ergibt sich daraus ein Vorwärts-, Rückwärts- oder Staueffekt für das Produkt im Mischtrog. Im ersten Drittel des Palettenmischers 16, d.h. in der Zone des Materiallaufes 7, in die eine Wasserverteilungsleitung 78 mündet, wird in erster Linie eine intensive Vermischung des Wassers mit dem Produkt bezweckt, was durch entsprechende Schrägstellung der Paletten 18 in der Zone verursacht wird. Vorteilhaft ist dabei auch eine höhere Produktbeladung, auf die die Linie 79 hinweist. Nach der Mischung folgt die Zone des Anteigens bzw. der Agglomeratbildung. Hierbei sollen die Paletten eine leichte Knet- und insbesondere auch eine Homogenisierungswirkung entfalten. Der ganze Vorgang wird so gesteuert, daß das Produkt 2 bis 20 Minuten im Mischgehäuse 74 verweilt. In den meisten Fällen erreicht man mit einer Verweilzeit zwischen 5 und 15 Minuten einen optimalen Effekt. Sowohl die Intensität des Mischvorganges, wie auch die Verweilzeit und der Füllungsgrad können unter Wahl einer besonderen Mischwellendrehzahl gesteuert werden. Die Drehzahl der Mischwellen liegt in der Regel zwischen 30 und 50 U/min., wobei gegebenfalls die Mischwellen unterschiedliche Drehzahlen aufweisen können. Das Produkt wird schließlich über einen freien Überfall 19 und dem Auslaß 80 der nächsten Verfahrensstufe zugeführt. Die Gesamtheit der Einflußfaktoren kann optimal gewählt werden, wenn die in der Backwaren- oder Brotindustrie vorhandenen Erfahrungswerte herangezogen werden. Wenn das Produkt den Palettenmischer verläßt, soll es möglichst gleichmäßige kugelartige Agglomeratstruktur aufweisen, die ihrerseits wiederum möglichst homogen sein soll.

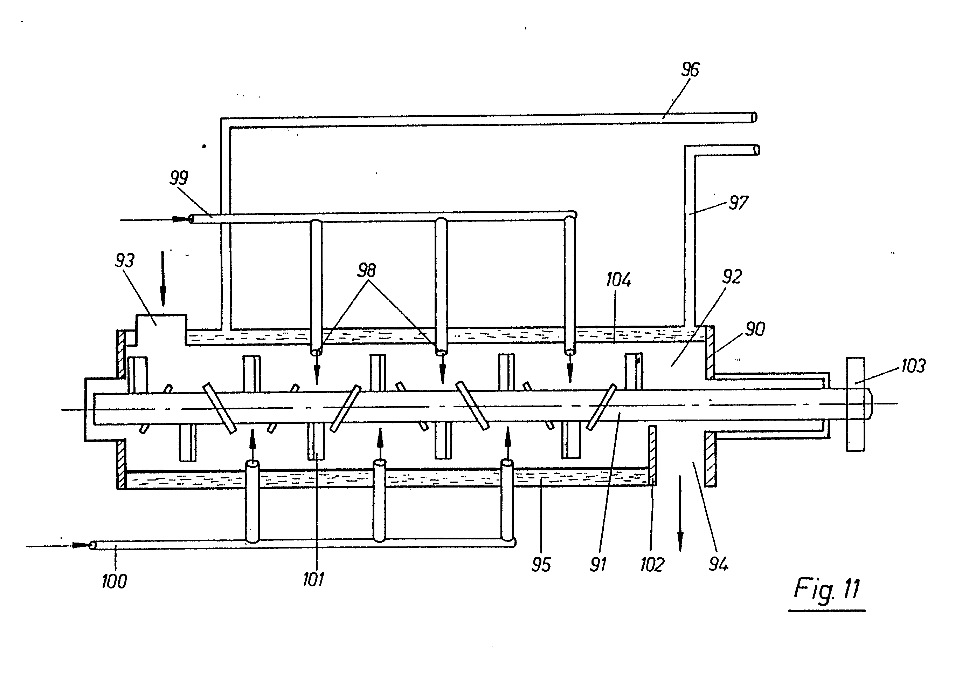

In der Figur 10 wird eine in wirtschaftlicher Hinsicht besonders vorteilhafte Backkammer dargestellt, die sich baulich von der Ausführungsform gemäß Figur 2 unterscheidet. In der Figur 10 wird die Backeinrichtung durch die Backkammer 90 dargestellt. In der Backkammer befindet sich eine horizontal und drehbar gelagerte Auflockerungswelle 91, die gleichzeitig eine Misch- und Förderfunktion ausübt. Die Backkammer 90 wird in der Figur 11 in einem größeren Maßstab dargestellt. Die Backkammer wärmt einen länglichen zylindrischen Backraum 92 auf, in dem das Produkt über einen Einlauf 93 eingeführt wird. Das Produkt verläßt die Backkammer über einen Auslauf 94. Die Backkammer 90 ist durch einen Doppelmantel 95 von der Umgebung isoliert. Der Doppelmantel kann durch Heizflüssigkeiten (insbesondere Gas oder Dampf) auf eine gewünschte Temperatur aufgeheizt werden, wobei das Heizmedium über eine Leitung 96 und über eine Leitung 97 wieder zu einer nicht dargestellten Heizung zurückgeleitet wird. Der Doppelmantel 95 kann in der Praxis nochmals durch einen eigentlichen Isoliermantel umgeben werden, damit die Wärmeverluste gering gehalten werden. In die Backkammer 90 münden ferner eine Anzahl (z.B. 10 bis 20) Wasserdampfzuführdüsen 98, die an eine Wasserdampfspeiseleitung 99 bzw. 100 angeschlossen sind. Über die Wasserdampfzuführdüsen wird Heizdampf direkt in die Backkammer 90 eingeführt, um die erforderliche Back- und Dämpfwirkung für das zu behandelnde Produkt zu erhalten.

Die Auflockerungswelle 91 weist eine Anzahl Paletten 101 auf, die eine Mehrfachfunktion ausüben. Die Paletten sollen das Produkt von dem Einlauf 93 zu dem Auslauf 94 fördern, das Produkt lockern, jedoch dabei die Agglomeratstruktur des Produktes in keiner Weise negativ beeinflussen. Die Paletten 101 haben ferner auch eine Mischfunktion. Das Produkt erfährt durch einen Überfall 102 einen leichten Rückstau in der Backkammer 90. Die letzte Palette 101 gegenüber dem Auslauf 94 wirft das Produkt über den Überfall 102 in den Auslauf 94. Die Auflockerungswelle 91 wird über eine Riemenscheibe über einen nicht dargestellten Motor auf eine Umdrehungszahl in der Regel zwischen 30 und 50 U/min. gebracht. Durch die Palettenstellung und durch die bestimmte Wahl der Umdrehungszahl der Auflockerungswelle 91 sowie der durchgesetzten Produktmenge kann sowohl die Verweilzeit des Produktes in der Backkammer 90 gesteuert als auch insbesondere der Füllungsgrad in der Backkammer 90 eingeregelt werden.

Im Betrieb wird der Doppelmantel 95 auf eine Temperatur von 90 bis 250 °C, vorzugsweise 100 bis 200 °C, gebracht. Einerseits wird dadurch die Kondensatbildung an der Innenwand 104 der Backkammer 90 verhindert und andererseits ein kleiner Beitrag der Heizung für die Backkammer 90 geleistet. Allerdings soll der Hauptteil der Wärmeenergie in Form des Direktdampfes zugegeben werden. Die indirekte, über die Innenwand 104 auf das Produkt übertragende Wärme macht in der Regel nur einen Teil, z.B. 10 bis 20 % der Gesamtwärmemenge aus.

Sehr wesentlich ist es auch, daß die rotierende Auflockerungswelle 91 im praktischen Betrieb zwecks Reinigens in Längsrichtung herausziehbar ist. Die Schichthöhe des Produktes soll höchstens auf etwa 3/4, in der Regel aber auf weniger als 1/2 des Durchmessers der Backkammer 90 gehalten werden. Bei richtiger Einstellung der einzelnen Parameter verläßt das Produkt die Backkammer 90 in praktisch rieselfähigem Zustand.

Die in Figur 11 dargestellte Rundbackkammer 90 weist mehrere Vorteile auf, insbesondere in baulicher Hinsicht. So kann eine kompakte bwz. kleinere Anlage gebaut werden, die leicht gepflegt und im allgemeinen sehr leicht gesäubert werden kann. Die Rundkammer kann sehr klein gehalten werden und z.B. lediglich zwei Meter lang sein. Die inneren Kontaktflächen der Rundkammer sind glatt und werden durch die Wirbelbewegung des Produktes zwangsläufig stets sauber gehalten.

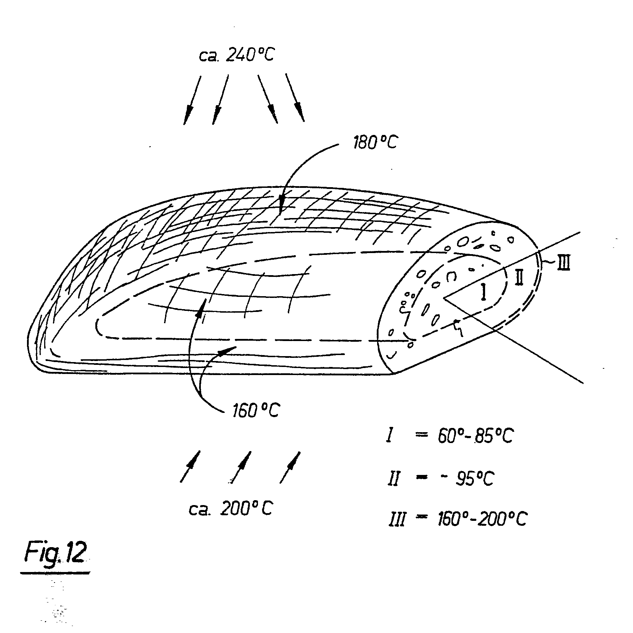

Die Figur 12 zeigt schematisch die Bedingungen, die während des herkömmlichen Brotbackens in einem Brotlaib herrschen. Das Brot wird bei dem dargestellten Beispiel bei ca. 240 °C gebacken. Die Brotrinde nimmt während des Backens eine Temperatur von ca. 160 bis 180 °C an. Im Inneren des Brotes kann aus naturgesetzlichen Gründen lediglich eine Maximaltemperatur von 95 bis 100 °C auftreten. Gegen Ende der Backzeit können im Brot verschiedene Temperaturzonen festgestellt werden. So liegt die Temperatur in der Mitte bei ca. 60 bis 85 °C und in der anschließenden Schicht bei ca. 95 °C. Die eigentliche Brotrinde nimmt eine Temperatur von 160 bis 200 °C an. In der Brotrinde verdampft während des Backens nahezu das gesamte Wasser. Es verbleibt hingegen im Inneren des Brotes noch eine Feuchtigkeit bis zu 60 Gew.-%.

Beispiel 1

Als Rohmaterial wurde ein Weißmehl aus Weichweizen Nr. 550 benutzt, der sich wie folgt

**0 016 442**

zusammensetzt :

| | | |
|---|---|---|
| Ausgangsfeuchte | 12,3 % | |
| Asche | 0,34 % | (bezogen auf Trockensubstanz) |
| Stärke | 79,1 % | (bezogen auf Trockensubstanz) |
| Protein | 11,3 | (bezogen auf Trockensubstanz) |
| Fett | 0,68 % | (bezogen auf Trockensubstanz) |

Von diesem Rohmaterial wurden 500 kg in einem üblichen Palettenmischer, wie er z.B. in den Figuren 8 und 9 beschrieben wird, unter Zugabe von Wasser bis zu einer Verarbeitungsfeuchtigkeit von 39,4 % behandelt. Das erhaltene, in Agglomeratform vorliegende Produkt wurde dabei 10 Minuten lang in dem Palettenmischer behandelt. Anschließend wurden die Agglomerate auf eine Größe von kleiner als 8 mm zerkleinert. Darauf erfolgte die thermische Behandlung auf einem Backband in Form eines luftdurchlässigen Drahtgewebes, durch das Wasserdampf auf das zu behandelnde Material geführt wurde. Die Einwirkzeit betrug 3 Minuten und die Einwirktemperatur 98 °C. Im Anschluß daran wurde dieses Material auf einem Durchlaufbandtrockner mit mehreren Schuppenbändern, die alle übereinander in einem geschlossenen Trockenkasten umliefen, getrocknet. Während des Trocknens betrug die durchschnittliche Temperatur 80 und $\Delta t$ von 30 °C. Eine Granulierung auf einem Walzenstuhl, der mit Riffelwalzen versehen war, führte zu einem Paniermehlgranulat in dem Größenbereich von 200 bis 1 800 $\mu$m. Der Gelatinisierungsgrad des fertigen Paniermehls betrug 90 %. Die Verkleisterung war optimal. Die Quellfähigkeit betrug 1:4,8. Das erhaltene Paniermehl zeigte bei der Verarbeitung ausgezeichnete Eigenschaften und unter dem Mikroskop keine intakten Stärkekörner. ($\Delta t$ 30 °C entspricht relativer Feuchtigkeit von 22 %).

### Beispiel 2

Das Beispiel 1 wurde wiederholt, wobei jedoch ein Dunst aus Hartweizen eingesetzt wurde. Die Verarbeitungsfeuchtigkeit wurde auf 24 % eingestellt. Die thermische Behandlung während des Backvorgangs erfolgte während 6 Minuten bei einer Einwirkzeit von 90 °C. Das Trocknungsklima lag bei ca. 80 °C und $\Delta t$ von 30 °C. Das Paniermehl stellte ein Granulat einer Teilchengröße von 200 bis 1 800 $\mu$m dar. Der Gelatinisierungsgrad betrug 60 %. ($\Delta t$ 30 °C ~ rel. Feuchtigkeit von 22 %).

Das Fertigprodukt zeigte im Vergleich zu dem des Beispiels 1 einen lockeren Eindruck. Seine Quellfähigkeit betrug 1 : 2,0. Unter dem Mikroskop erschienen noch intakte Stärkekörner.

### Beispiel 3

Entsprechend der Verfahrensweise des Beispiels 1 wurde Weißmehl (Weichweizen) in einer Mischung mit Salz, Paprika, modifizierter Stärke und Pfeffer verarbeitet. Die Ausgangsfeuchtigkeit betrug 13,8 % Wasser und die Verarbeitungsfeuchtigkeit 29,8 % Wasser. Die thermische Behandlung während des Backvorgangs dauerte 3 Minuten und 40 Sekunden bei einer Einwirktemperatur von 98 °C. Das Trocknungsklima hatte eine Temperatur von 72,5 °C, die rel. Feuchtigkeit betrug 34 % (~ $\Delta t$ = 21 °C). Nach der Granulierung wurden Granulate einer Teilchengröße von 200 bis 1 800 $\mu$m erhalten. Der Gelatinisierungsgrad betrug ca. 85 %.

Durch die Zugabe von Paprika wurde ein schönes ansehnliches Produkt erhalten, das für das Panieren von Fertiggerichten besonders geeignet war. Die Quellfähigkeit betrug 1 : 3,5. Unter dem Mikroskop erschienen keine intakten Stärkekörner mehr.

### Beispiel 4

Die Verfahrensweise des Beispiels 1 wurde mit einem Hartweizengrieß einer Korngröße von ca. 0,3 bis 0,7 mm wiederholt. Die Ausgangsfeuchtigkeit betrug 11,4 % und die Verarbeitungsfeuchtigkeit 34 % Wasser. Das Ausgangsmaterial enthielt folgende weitere Bestandteile : 0,77 % Asche, 75,8 % Stärke, 11,03 % Protein und 1,5 % Fett (jeweils bezogen auf Trockensubstanz). Die thermische Behandlung während des Backvorgangs erfolgte während 4 Minuten bei einer Einwirktemperatur von 95 °C. Das Trocknungsklima lag bei 70 °C, die rel. Feuchtigkeit bei 48 % (~ $\Delta t$ = 15 °C). Nach der Granulierung wurde ein Paniermehl einer Teilchengröbe von 500 bis 1 500 $\mu$m erhalten, das einen Gelatinisierungsgrad von 80 % aufwies. Seine Quellfähigkeit betrug 1 : 3. Es war insbesondere zur Herstellung von Snackartikeln geeignet. Unter dem Mikroskop erschienen noch vereinzelt, jedoch nicht verkleisterte Stärkekörner.

### Beispiel 5

Die Verfahrensweise des Beispiels 1 wurde mit einer Mischung aus 50 % Weißmehl, 550 und 50 % Maismehl des Typs US-Yellow wiederholt. Die Analyse der Mischung ergab :

9

| | |
|---|---|
| Feuchtigkeit | 13,6 % |
| Asche | 0,71 % |
| Stärke | 79,1 % |
| Maltose | 1,43 % |
| Protein | 8,3 % |
| Fett | 1,08 % |
| Teilchengröße der Granulate | < 200 μm |
| Verarbeitungsfeuchtigkeit | 32,5 % |

Die thermische Behandlung erfolgte bei 98 °C während 4 Minuten. Das Trocknungsklima hatte eine Temperatur von 80 °C bei 21 % relativer Feuchtigkeit.

Nach Sichtung und Granulierung wurde für das Endprodukt eine Teilchengröße des Granulats von 200 bis 600 μ angestrebt und erhalten. Die hohe Gelatanisierung und die gute Quellfähigkeit des nach dem Beispiel 1 hergestellten Produktes gaben dem Weizen-Mais-Brei sehr gute Eigenschaften als Instant-Produkt, das kalt oder warm im Verhältnis 1 : 3, d. h., ein Teil Grieß und mindestens 3 Teile Flüssigkeit (Wasser oder Milch), angerührt werden konnte.

**Ansprüche**

1. Verfahren zur Herstellung von Paniermehl, insbesondere eines als Instantprodukt verwendbaren Paniermehls, dadurch gekennzeichnet, daß ein stärkehaltiges Rohmaterial in Form von Mehl, Dunst, Grieß oder Schrot unter Bildung von Agglomeraten bis auf einen Wassergehalt von 20 bis 50 Gew.-% aufgefeuchtet wird, anschließend die Agglomerate in heißem Wasserdampf so lange gebacken werden, bis sich darin ein Gelatinisierungsgrad von 50 bis 100 % eingestellt hat, und darauf die Agglomerate getrocknet werden.

2. Verfahren nach Anspruch 1, dadurch gekennzeichnet, daß nach dem Trocknen ein Zerkleinern durchgeführt wird.

3. Verfahren nach Anspruch 1 oder 2, dadurch gekennzeichnet, daß das Rohmaterial auf einen Wassergehalt von 30 bis 40 Gew.-% aufgefeuchtet wird.

4. Verfahren nach mindestens einem der Ansprüche 1 bis 3, dadurch gekennzeichnet, daß das Rohmaterial in einem Durchlaufpalettenmischer (16) aufgefeuchtet wird und die sich bildenden Zusammenballungen mit mechanischer Schlagwirkung zu Agglomeraten eines Durchmessers von weniger als 20 mm zerkleinert werden.

5. Verfahren nach mindestens einem der Ansprüche 1 bis 4, dadurch gekennzeichnet, daß die Agglomerate mit Naßdampf gebacken werden.

6. Verfahren nach Anspruch 5, dadurch gekennzeichnet, daß der Naßdampf so viel Feuchtigkeit enthält, daß die Feuchtigkeit des Rohmaterials um 1 bis 6 Gew.-% erhöht wird.

7. Verfahren nach mindestens einem der Ansprüche 1 bis 6, dadurch gekennzeichnet, daß Wasserdampf einer Anfangstemperatur von 90 bis 200 °C verwendet wird.

8. Verfahren nach Anspruch 7, dadurch gekennzeichnet, daß Wasserdampf einer Anfangstemperatur von 90 bis 130 °C verwendet wird.

9. Verfahren nach mindestens einem der Ansprüche 1 bis 8, dadurch gekennzeichnet, daß das Auffeuchten, das Backen und/oder das Trocknen kontinuierlich durchgeführt werden.

10. Verfahren nach mindestens einem der Ansprüche 1 bis 9, dadurch gekennzeichnet, daß die Agglomerate 1 bis 20 Minuten lang in Form einer auf einem siebartigen Förderband (31) sich befindenden Schüttschicht gebacken werden.

11. Verfahren nach Anspruch 10, dadurch gekennzeichnet, daß die Agglomerate 2 bis 6 Minuten lang gebacken werden.

12. Verfahren nach mindestens einem der Ansprüche 1 bis 9, dadurch gekennzeichnet, daß die Agglomerate 1 bis 20 Minuten lang in einer Schüttschicht in einer Backkammer (90) mit rotierender Palettenwelle (91) gebacken werden.

13. Verfahren nach mindestens einem der Ansprüche 1 bis 12, dadurch gekennzeichnet, daß die Agglomerate zwischen dem Backen und dem Trocknen auf einen Durchmesser von weniger als 20 mm zerkleinert werden.

14. Verfahren nach mindestens einem der Ansprüche 1 bis 13, dadurch gekennzeichnet, daß ein Teil des Paniermehls bereits nach dem Trocknen direkt durch Aussichten als Siebdurchfall gewonnen wird.

15. Verfahren nach Anspruch 14, dadurch gekennzeichnet, daß der Siebabstoß mittels Mahlwalzen (63, 64) zu den Agglomeraten der gewünschten Größe zerkleinert, gesichtet und der Vorgang ggf. wiederholt wird.

16. Verfahren nach Anspruch 15, dadurch gekennzeichnet, daß der Siebabstoß mittels Riffelwalzen durch Schneidwirkung zu Agglomeraten der gewünschten Größe zerkleinert wird.

17. Verfahren nach mindestens einem der Ansprüche 1 bis 16, dadurch gekennzeichnet, daß eine im Paniermehl nicht gewünschte Feinstfraktion abgetrennt und als Rohmaterial eingesetzt wird.

18. Verfahren nach mindestens einem der Ansprüche 1 bis 17, dadurch gekennzeichnet, daß dem Rohmaterial als Zutaten Salz, Pfeffer, Paprika, Zucker und/oder Aromastoffe zugemischt werden.

19. Verfahren nach Anspruch 18, dadurch gekennzeichnet, daß die Zutaten und das Wasser dem Rohmaterial in zwei getrennten Mischstufen zugegeben werden.

20. Vorrichtung zur Durchführung eines Verfahrens nach mindestens einem der Ansprüche 1 bis 19, gekennzeichnet durch eine Einrichtung (2) zum Auffeuchten des Rohmaterials, eine Backeinrichtung (3) mit einem siebartigen Förderband (31) und einem Trockner (4).

21. Paniermehl, insbesondere ein als Instantprodukt verwendbares Paniermehl, erhältlich nach einem Verfahren nach mindestens einem der Ansprüche 1 bis 19.

## Claims

1. Process for the production of breadcrumbs, particularly breadcrumbs usable as an instant product, characterized in that a starch-containing raw material in the form of flour, grits, semolina or meal is humidified to a water content of 20 to 50 % by weight, accompanied by the formation of agglomerates, after which the agglomerates are baked in hot steam until a gelatinization degree of 50 to 100 % is obtained therein and then the agglomerates are dried.

2. Process according to claim 1, characterized in that crushing takes place after drying.

3. Process according to claims 1 or 2, characterized in that the raw material is humidified to a water content of 30 to 40 % by weight.

4. Process according to at least one of the claim 1 to 3, characterized in that the raw material is humidified in a continuous pallet mixer (16) and the agglomerations which form are crushed through mechanical impact to agglomerates with a diameter of less than 20 mm.

5. Process according to at least one of the claims 1 to 4, characterized in that the agglomerates are baked in wet steam.

6. Process according to claim 5, characterized in that the wet steam contains so much moisture that the moisture content of the raw material is increased by 1 to 6 % by weight.

7. Process according to at least one of the claims 1 to 6, characterized in that steam with an initial temperature of 90 to 200 °C is used.

8. Process according to claim 7, characterized in that steam with an initial temperature of 90 to 130 °C is used.

9. Process according to at least one of the claims 1 to 8, characterized in that the humidification, baking and/or drying are carried out continuously.

10. Process according to at least one of the claims 1 to 9, characterized in that the agglomerates are baked for 1 to 20 minutes in the form of a loose material layer located on a sieve-like conveyor (31).

11. Process according to claim 10, characterized in that the agglomerates are baked for 2 to 6 minutes.

12. Process according to at least one of the claims 1 to 9, characterized in that the agglomerates are baked for 1 to 20 minutes in a loose material layer in a baking chamber (90) with a rotating pallet shaft (91).

13. Process according to at least one of the claims 1 to 12, characterized in that between baking and drying the agglomerates are crushed to a diameter of less than 20 mm.

14. Process according to at least one of the claims 1 to 13, characterized in that a portion of the breadcrumbs is directly obtained as siftings after drying.

15. Process according to claim 14, characterized in that the sieve overtails are crushed to agglomerates of the desired size by means of grinding rolls (63, 64), sifted and the process is optionally repeated.

16. Process according to claim 15, characterized in that the sieve overtails are crushed to agglomerates of the desired size by means of grooved rollers having a cutting action.

17. Process according to at least one of the claims 1 to 16, characterized in that a very fine fraction not desired in the breadcrumbs is separated and used as raw material.

18. Process according to at least one of the claims 1 to 17, characterized in that salt, pepper, paprika, sugar and/or flavour substances are mixed with the raw material as ingredients.

19. Process according to claim 18, characterized in that the ingredients and the water are added to the raw material in two separate mixing stages.

20. Apparatus for performing the process according to at least one of the claims 1 to 19, characterized by a device (2) for moistening the raw material, a baking mechanism (3) with a sieve-like conveyor belt (31) and a drier (4).

21. Breadcrumbs, particularly breadcrumbs usable as instant products, obtainable according to the process of at least one of the claims 1 to 19.

## Revendications

1. Procédé de fabrication de farine à panure, en particulier d'une farine à panure pouvant être utilisée en tant que produit à préparation instantanée, caractérisé en ce qu'une matière première féculente se présentant sous forme de farine, de recoupes, de semoule ou de gruau, est humidifiée avec formation d'agglomérats jusqu'à ce que la teneur en eau représente de 20 à 50 % en poids, les agglomérats étant ensuite cuits dans de la vapeur d'eau très chaude jusqu'à ce que le taux de gélatinisation soit établi entre 50 % et 100 %, les agglomérats étant ensuite soumis à dessiccation.

2. Procédé selon la revendication 1, caractérisé en ce qu'après la dessiccation est effectuée une opération de broyage.

3. Procédé selon la revendication 1 ou 2, caractérisé en ce que la matière première est humidifiée de manière à atteindre une teneur en eau comprise entre 30 % et 40 % en poids.

4. Procédé selon l'une des revendications 1 à 3, caractérisé en ce que la matière première est humidifiée dans un mélangeur à palettes continu (16) et en ce que les regroupements qui se forment sont soumis à un broyage par effet mécanique d'impacts de façon à obtenir des agglomérats ayant un diamètre inférieur à 20 mm.

5. Procédé selon l'une des revendications 1 à 4, caractérisé en ce que les agglomérats sont cuits à la vapeur humide.

6. Procédé selon la revendication 5, caractérisé en ce que la vapeur humide contient un taux d'humidité tel que le taux d'humidité de la matière première est augmenté de 1 à 6 % en poids.

7. Procédé selon l'une des revendications 1 à 6, caractérisé en ce que la vapeur d'eau est utilisée à une température de départ comprise entre 90 °C et 200 °C.

8. Procédé selon la revendication 7, caractérisé en ce que la vapeur d'eau est utilisée à une température de départ comprise entre 90 °C et 130 °C.

9. Procédé selon l'une des revendications 1 à 8, caractérisé en ce que l'humidification, la cuisson et/ou la dessiccation sont effectuées de façon continue.

10. Procédé selon l'une des revendications 1 à 9, caractérisé en ce que les agglomérats sont cuits pendant une durée de 1 à 20 minutes sous forme d'une couche déposée en vrac sur une bande transporteuse (31) en forme de tamis.

11. Procédé selon la revendication 10, caractérisé en ce que les agglomérats sont cuits pendant une durée comprise entre 2 et 6 minutes.

12. Procédé selon l'une des revendications 1 à 9, caractérisé en ce que les agglomérats sont cuits pendant une durée comprise entre 1 et 20 minutes sous forme d'une couche en vrac dans une chambre de cuisson (90) comprenant un arbre à palettes tournant (91).

13. Procédé selon l'une des revendications 1 à 12, caractérisé en ce que les agglomérats sont réduits en fragments ayant un diamètre inférieur à 20 mm entre la cuisson et la dessiccation.

14. Procédé selon l'une des revendications 1 à 13, caractérisé en ce qu'une partie de la farine à panure est obtenue directement après la dessiccation par tamisage et sous forme de produit de tamisage.

15. Procédé selon la revendication 14, caractérisé en ce que les produits de refus de tamisage sont réduits en agglomérats ayant les dimensions voulues au moyen de cylindres de mouture (63, 64), puis, tamisée, le processus étant éventuellement répété.

16. Procédé selon la revendication 15, caractérisé en ce que les produits de refus de tamisage sont réduits en agglomérats ayant les dimensions voulues au moyens de cylindres cannelés par effet de cisaillement.

17. Procédé selon l'une des revendications 1 à 16, caractérisé en ce que la fraction fine non désirée de la farine à panure est séparée et utilisée comme matière première.

18. Procédé selon l'une des revendications 1 à 17, caractérisé en ce que l'on mélange à la matière première des ingrédients tels que du sel, du poivre, du paprika, du sucre et/ou des aromates.

19. Procédé selon la revendication 18, caractérisé en ce que les ingrédients et l'eau sont ajoutés à la matière première au cours de deux opérations de mélange séparées.

20. Dispositif pour la mise en œuvre d'un procédé selon l'une des revendications 1 à 19, caractérisé en ce qu'il comprend un dispositif d'humidification (2) de la matière première, un dispositif de cuisson (3) comprenant une bande transporteuse (31) en forme de tamis et un dessiccateur (4).

21. Farine à panure, en particulier farine à panure pouvant être utilisée en tant que produit à préparation instantanée, pouvant être obtenue par un procédé selon l'une des revendications 1 à 19.

**0 016 442**

Rohmaterialien + Zusätze

Wasser

+ Flüssig

Mehl | Griess | Dunst

1

Fig.1

2

Befeuchten

3

Backen

Trocknen

4

Paniermehl

1

*Fig. 2*

Fig.3

**Fig.4**

**Fig.5**

**Fig.6**

4

*Fig. 7*

_Fig. 8_

_Fig. 9_

0 016 442

0 016 442

Fig. 10

7

*Fig. 11*

0 016 442

ca. 240°C

180°C

160°C

ca. 200°C

I = 60°- 85°C

II = ~ 95°C

III = 160°- 200°C

_Fig.12_

_Fig.13_

_Fig.14_

_Fig.15_

_Fig.16_

_Fig.17_